# EUROPÄISCHE PATENTSCHRIFT

(11) **EP 4 492 805 B1**
(45) Veröffentlichungstag und Bekanntmachung des Hinweises auf die Patenterteilung: **02.07.2025**
(21) Anmeldenummer: 23185641.0
(22) Anmeldetag: 14.07.2023
(51) Int. Cl.: H04N 23/60, H04N 23/611, H04N 23/63, G06T 7/00, G06V 10/98

(54) **COMPUTERIMPLEMENTIERTES VERFAHREN ZUM BEWERTEN EINES KAMERABILDS**
COMPUTER-IMPLEMENTED METHOD FOR EVALUATING A CAMERA IMAGE
PROCÉDÉ MIS EN OEUVRE PAR ORDINATEUR POUR ÉVALUER UNE IMAGE DE CAMÉRA

(43) Veröffentlichungstag der Anmeldung: 15.01.2025
(73) Patentinhaber: Deutsche Telekom AG, 53113 Bonn (DE)
(72) Erfinder: Minow, Jascha, 64625 Bensheim (DE); Jahn, Carl, 65191 Wiesbaden (DE); El Mallouki, Said, 56329 St. Goar (DE)
(74) Vertreter: Braun-Dullaeus Pannen Emmerling Patent- & Rechtsanwaltspartnerschaft mbB

(56) Entgegenhaltungen:
- US-A1- 2012 154 608
- US-A1- 2012 213 445
- US-A1- 2021 303 968

## Beschreibung

### Gebiet der Erfindung

Die vorliegende Erfindung betrifft ein computerimplementiertes Verfahren zum Bewerten eines Kamerabilds. Zudem betrifft die Erfindung eine Kameravorrichtung, eine Servervorrichtung und ein System umfassend eine Kameravorrichtung und eine Servervorrichtung, die zur Durchführung des computerimplementierten Verfahrens ausgebildet sind. Ebenso betrifft die Erfindung ein zugehöriges Computerprogrammprodukt.

### Hintergrund der Erfindung

Smartphones haben traditionelle Kameras im Hinblick auf die Bildqualität nahezu eingeholt. Technische Parameter spielen, außer in bestimmten Situationen, kaum noch eine Rolle. Beispielsweise können Belichtung, Schärfe, Farben, etc. mittels einer Software in der Nachbearbeitung beeindruckende Ergebnisse aus mittelmäßigen Bildern zaubern. Allein die Kreativität setzt Grenzen bei den Bildern, so dass die meisten Schnappschüsse immer noch als uninteressant und langweilig empfunden werden können. Beispielsweise kann man in den sozialen Medien die Ergebnisse von Laienfotografen einsehen und ist oft ernüchtert, wenn man sie mit professionellen Fotografen vergleicht. Beispielsweise sind Framing, Licht, Motive, etc. häufig doch nicht so spannend, wie es der Fotograf empfand und transportieren wollte.

Als Laienfotograf hat man zwar vielleicht die Fotos von bekannten Fotografen vor Augen, an denen man sich orientieren möchte, jedoch scheitert man in der Praxis häufig daran, vergleichbare Kamerabilder zu erzielen. Beispielsweise möchte man bei Schnappschüssen im Urlaub oder im Familienverbund die Tiefenschärfe, das Setting, die Lichtverhältnisse etc. doch so berücksichtigen, dass das Bild am Ende sehenswert ist und eventuell sogar Eingang in ein physisches Fotoalbum oder ein Fotobuch zum Verschenken finden kann, ohne dass man sich blamiert.

Laienfotografen versuchen das Problem häufig dadurch zu lösen, dass eine Vielzahl von Kamerabildern desselben Motivs aufgenommen wird, um dann später das Beste aus vielleicht 10-20 Bildern auszuwählen. Dies verursacht jedoch einen erhöhten Speicherplatzbedarf.

Der vorliegenden Erfindung liegt daher die Aufgabe zugrunde Techniken für das effiziente Anfertigen von Fotos bereitzustellen. Insbesondere liegt der Erfindung die Aufgabe zugrunde, den Speicherplatzbedarf beim Aufnehmen von Kamerabildern zu verringern. Darüber hinaus soll eine geführte Mensch-Maschinen-Interaktion bereitgestellt werden, um eine Bewertung eines Kamerabilds zu verbessern, was zu einer verringerten Anzahl von aufgenommenen Kamerabildern und somit zu verringertem Speicherplatzbedarf führt. Darüber hinaus sollen bevorzugt reproduzierbare Ergebnisse beim Aufnehmen eines Kamerabilds erzielt werden, um die Anzahl von aufgenommenen Kamerabildern und somit den Speicherplatzbedarf zu verringern.

Das Dokument US 2012/213445 A1 bezieht sich auf eine Methode zur Bewertung eines aufgenommenen Bildes offenbart. Es wird auf eine Datenbank mit Referenzbildern zugegriffen. Einem oder mehreren der Referenzbilder ist ein Bewertungswert zugeordnet. Ein oder mehrere Referenzbilder werden ausgewählt, um mindestens eine Teilmenge von Referenzbildern auf der Grundlage von Metadaten zu bilden, die mit den Referenzbildern verbunden sind. Die Referenzbilder der Teilmenge werden ungefähr an einem Aufnahmeort des aufgenommenen Bildes und zu einem Zeitpunkt, der mit einem Aufnahmezeitpunkt des aufgenommenen Bildes verbunden ist, aufgenommen. Ein oder mehrere ähnliche Referenzbilder werden aus der ausgewählten Teilmenge auf der Grundlage mindestens eines Merkmals des aufgenommenen Bildes bestimmt. Das aufgenommene Bild wird auf der Grundlage der mit den ähnlichen Referenzbildern verbundenen Bewertungswerte bewertet.

Das Dokument US 2021/303968 A1 bezieht sich auf Verfahren, die einem Benutzer eines Bilderfassungsgeräts, das ein System mit künstlicher Intelligenz enthält, das eingehende Bilder analysiert, um beispielsweise zu bestimmen, ob die eingehenden Bilder automatisch erfasst und gespeichert werden sollen, Feedback geben. Ein Beispielsystem kann auch im Sucherteil einer Benutzerschnittstelle, die auf einem Display dargestellt wird, eine grafische Intelligenz-Feedback-Anzeige in Verbindung mit einem Live-Videostream enthalten. Die grafische Intelligenz-Feedback-Anzeige kann für jedes einer Vielzahl von Bilden, wenn ein solches Bild im Sucherteil der Benutzerschnittstelle dargestellt wird, ein jeweiliges Maß für ein oder mehrere Attribute der jeweiligen Szene grafisch anzeigen, die durch das vom künstlichen Intelligenzsystem ausgegebenen Bild dargestellt wird.

Das Dokument US 2012/154608 A1 bezieht sich auf ein Verfahren, welches das Einfügen eines Referenzbildes in einen Platzhalter eines Dokuments und das Bestimmen von Zielmerkmalen eines nachfolgenden Bildes beinhaltet. Die Zielmerkmale werden auf der Grundlage der Merkmale des Referenzbildes und des verbleibenden Platzhalters im Dokument bestimmt. Der sekundäre Satz von Bilderfassungseinstellungen wird an das sekundäre Bilderfassungsgerät übermittelt, um das sekundäre Bilderfassungsgerät in die Lage zu versetzen, das nachfolgende Bild auf der Grundlage des sekundären Satzes von Bilderfassungseinstellungen zu erfassen, und der Platzhalter des Dokuments wird mit dem nachfolgenden Bild gefüllt.

### Zusammenfassung der Erfindung

Die erfindungsgemäße Lösung der Aufgabe erfolgt durch die Merkmale der unabhängigen Patentansprüche. Vorteilhafte Weiterbildungen der Erfindung ergeben sich aus den Unteransprüchen. Die Merkmale der verschiedenen nachfolgend beschriebenen Aspekte der Erfindung oder der verschiedenen Ausführungsformen können miteinander kombiniert werden, sofern dies nicht ausdrücklich ausgeschlossen oder technisch zwingend erforderlich ist.

Die Erfindung betrifft in einem ersten Aspekt ein Verfahren, insbesondere auf einem Computer implementierbar, zum Bewerten eines Kamerabilds, umfassend die folgenden Schritte:
- Bereitstellen des Kamerabilds,
- Ermitteln wenigstens eines Bildmerkmals des Kamerabilds,
- Bestimmen einer Gruppe von Referenzbildern anhand des Bildmerkmals,
- Verwenden von wenigstens einem Referenzbildmerkmal für die Gruppe von Referenzbildern,
- Vergleichen des Bildmerkmals und des Referenzbildmerkmals, und
- Berechnen eines Bewertungsparameters für das Kamerabild basierend auf dem Vergleich zwischen dem Bildmerkmal und dem Referenzbildmerkmal.

Dadurch, dass eine Gruppe von Referenzbildern anhand des Bildmerkmals bestimmt und das Referenzbildmerkmal verwendet wird sowie der Berechnung des Bewertungsparameters basierend auf dem Vergleich zwischen dem Bildmerkmal und dem Referenzbildmerkmal, kann beispielsweise in Echtzeit, während der Nutzung einer Kameravorrichtung, eine Szene eingeschätzt werden und konkrete Empfehlungen bezüglich der künstlerischen und fotografischen Aspekte des Bildes gegeben werden. Die Kameravorrichtung kann beispielsweise das Fotomodul eines Smartphones sein. Dadurch kann beispielsweise ein Kamerabild erkannt werden, dessen Bewertungsparameter größer oder gleich einem vorab bestimmten Schwellwert liegt. Auf diese Weise kann erreicht werden, dass nur dieses Kamerabild (das diese Kriterien erfüllt) aufgenommen und/oder gespeichert wird und somit Speicherplatz gespart wird.

Alternativ oder ergänzend ist es auch vorstellbar, dass das computerimplementierte Verfahren auf ein bereits gespeichertes Kamerabild angewendet wird, um zu erkennen, ob dieses Kamerabild gelöscht oder behalten werden kann.

Das "Bereitstellen" umfasst dabei verschiedene Arten oder "Zustände" eines Kamerabilds, beispielsweise ein Kamerabild vor dessen dauerhaften Speicherung auf einer Kameravorrichtung. Dies ist der Fall, wenn beim Fotografieren das Kamerabild auf einem Display der Kameravorrichtung angezeigt wird und somit nur erfasst wird. Damit kann beim Fotografieren in Echtzeit das Verfahren auf das Kamerabild angewendet werden. Alternativ oder ergänzend ist es auch vorstellbar, dass ein auf einer Kameravorrichtung oder einer Servervorrichtung bereits dauerhaft gespeichertes oder zwischengespeichertes Kamerabild für das computerimplementierte Verfahren bereitgestellt wird.

Ein Referenzbild kann beispielsweise ein Kamerabild eines angesehenen Fotografen sein. Das oder die Referenzbilder können auch von dem Nutzer der Kameravorrichtung ausgewählt, von einem Expertenteam zusammengestellt werden, mittels eines Algorithmus und/oder mittels einer künstlichen Intelligenz ausgewählt werden. Insbesondere können der Algorithmus oder die künstliche Intelligenz Bewertungsmetriken und/oder Häufigkeiten der Bewertung, bswp. im Internet, berücksichtigen. Wird ein Bild oft und z.B. mit 5 von 5 maximalen Sternen bewertet, kann es als Referenzbild ausgewählt werden. Das Referenzbild kann einen Qualitätsparameter aufweisen, der für ein Referenzbild über einem vorab bestimmten Schwellwert liegen kann.

Dabei ist es vorstellbar, dass der Bewertungsparameter oder wie weiter unten beschrieben Empfehlungen auf Basis einer Vielzahl von Referenzbildern aus einer Referenzbilddatenbank ermittelt werden. Es ist möglich, dass die Referenzbilder als professionell und ästhetisch gelten und in das jeweilige Analysemodell für eine Gruppe von Referenzbildern eingeflossen sind. Dabei ist vorstellbar, dass die Auswahl von Referenzbildern durch eine computerimplementierte Analyse ihrer Häufigkeit ihrer Verwendung bzw. von Bewertungen erfolgt.

In einer bevorzugten Ausführungsform umfasst das Ermitteln wenigstens eines Bildmerkmals des Kamerabilds ein Verwenden eines Bilderkennungsalgorithmus. Dadurch ist es möglich, den Inhalt des Kamerabilds als ein Bildmerkmal zu ermitteln und das Kamerabild einer Gruppe von Referenzbildern zuzuordnen. Beispiele für eine Gruppe von Referenzbildern können Porträts, Landschaftsaufnahmen, Sportfotos, Personenaufnahmen, etc. sein. Dadurch wird das Bestimmen einer Gruppe von Referenzbildern erleichtert.

Darüber hinaus ist es auch möglich, dass für jede Gruppe von Referenzbildern wenigstens ein zusätzliches Analysemodell vorgesehen ist, um weitere Bildmerkmale des Kamerabilds zu ermitteln, die spezifisch für die ermittelte Gruppe sein können. Darüber hinaus ist es auch möglich, dass solch ein Analysemodell die Gruppe von Referenzbildern analysiert und wenigstens ein Referenzbildmerkmal ermittelt. Die Bestimmung des Referenzbildmerkmals kann vor dem Bereitstellen des Kamerabilds erfolgen und beispielsweise für die Gruppe von Referenzbildern abgespeichert werden. Alternativ oder ergänzend ist es auch möglich, dass die Ermittlung des Referenzbildmerkmals nach dem Bereitstellen des Kamerabilds erfolgt, bevorzugt ist es hier möglich, dass dabei die Ermittlung des Referenzbildmerkmals basierend auf dem Bildmerkmal des Kamerabilds erfolgt.

In einer bevorzugten Ausführungsformen umfasst das Ermitteln wenigstens eines Bildmerkmals des Kamerabilds ein Verwenden wenigstens eines Metadatenpunkts von Metadaten des Kamerabildes. Ein Metadatenpunkt als ein Bildmerkmal erleichtert es ebenfalls, ein Bildmerkmal des Kamerabild zu ermitteln und das Kamerabild einer Gruppe von Referenzbildern zuzuordnen. Besonders bevorzugt kann ein Metadatenpunkt eine Kameraeinstellung einer Kameravorrichtung sein, mit der das Kamerabild erfasst wurde. Allgemein kann ein Metadatenpunkt sein: Datum und/oder Uhrzeit, GPS-Position, Kompassorientierung, Gyroskop-Datenpunkt (Spin-Achsen-Richtung(en)), ISO-Wert, Apertur-Wert, Belichtungszeit, etc. Darüber hinaus ist vorstellbar, dass Metadaten beispielsweise im Exif-Format vorliegen.

Dabei ist es vorstellbar, dass der Wert eines Metadatenpunktes des Kamerabildes in einem vorher bestimmten Bereich um einen Wert eines Metadatenpunktes für die Gruppe von Referenzbildern liegt, um eine Gruppe von Referenzbildern zu bestimmen. Der Wert eines Metadatenpunktes für die Gruppe von Referenzbildern kann zum Beispiel ein Mittelwert einzelner Metadatenpunkte der Referenzbilder sein.

In einer besonders bevorzugten Ausführungsformen umfasst das Verfahren ein Ermitteln von neuen Kameraeinstellungen zur Verbesserung des Bewertungsparameters und/oder bevorzugt ein Übermitteln der neuen Kameraeinstellungen an die Kameravorrichtung. Dadurch ist es möglich, dass die Kameravorrichtung verbesserte Kameraeinstellungen erhält, sodass ein neues Kamerabild einen verbesserten Bewertungsparameter erzielen würde. Beispielsweise: 1-3 Metadaten eines Bildmotivs werden erfasst und in der Bilddatenbank dann basierend auf diesen entsprechenden Bildern gesucht (+/- 10% Abweichung zum aktuellen Motiv). Aus den gefundenen Bildern, werden die Kameraeinstellungen ermittelt, gemittelt und dann auf die eigene Kamera angewendet und das Bild angefertigt werden.

In einer Ausführungsformen umfasst das computerimplementierbare Verfahren ein Anzeigen des Bewertungsparameters an die Kameravorrichtung. Dadurch ist es auf einfache Art und Weise möglich, einem Benutzer der Kameravorrichtung eine Rückmeldung zu geben, ob es sich lohnt, dass bereitgestellte Kamerabild zu speichern bzw. dieses zu verwerfen, um Speicherplatz zu sparen.

In einer besonders bevorzugten Ausführungsformen umfasst das computerimplementierbare Verfahren ein Erzeugen einer Anweisung zum Verbessern des Kamerabilds an einen Benutzer der Kameravorrichtung, wobei bevorzugt die Anweisung dem Benutzer der Kameravorrichtung angezeigt wird, wenn der Bewertungsparameter kleiner oder gleich einem vorbestimmten Schwellwert ist. Im letzten Fall wird die Anweisung nur angezeigt, wenn das Kamerabild verbessert werden sollte, was zusätzlichen Aufwand seitens der Kameravorrichtung verhindert.

Allgemein ist es dadurch möglich, dass das computerimplementierbare Verfahren während der Nutzung der Kameravorrichtung vorzugsweise in Echtzeit Empfehlungen bezüglich der Szene, beispielsweise also Abstand zum Motiv, Hintergrund, Lichtverteilung im Gesamtbild, Positionierung der Personen, Höhe und Winkel der Kamera und weitere Parameter/Bildmerkmale liefert. Folgende Empfehlungen sind beispielhaft möglich:
- Position des Motivs auf dem Bild mittels Pfeilen auf dem Display optimal platzieren (im Hinblick auf das Gesamtbild sowie den Hintergrund),
- Position des Fotografen im Bezug zum Motiv verändern (Bspw. wegen Gegenlicht, oder um ein störendes Objekt im Hintergrund nicht mit zu fotografieren), etc.

Dabei ist es von Vorteil, wenn die Anweisung dem Benutzer nur dann angezeigt wird, wenn der Bewertungsparameter kleiner oder gleich einem vorbestimmten Schwellwert ist, da andernfalls das bereitgestellte Kamerabild den Anforderungen genügt und aufgenommen oder behalten werden kann.

Allgemein kann der Bewertungsparameter dem Benutzer der Kameravorrichtung angezeigt werden, beispielsweise während einer Aufnahme im Bildschirm der Kameravorrichtung. Dadurch kann der Benutzer anhand des Bewertungsparameters entscheiden, ob die Qualität des Kamerabilds ausreichend ist und das Kamerabild aufnehmen oder speichern.

In einer besonders bevorzugten Ausführungsformen umfasst das computerimplementierbare Verfahren ein Erzeugen einer Anweisung an die Kameravorrichtung zum Aufnehmen des Kamerabilds, wenn der Bewertungsparameter größer oder gleich einem vorbestimmten Schwellwert ist. Dadurch ist es möglich, dass die Kameravorrichtung automatisch das bereitgestellte Kamerabild aufnimmt oder speichert. Dies erfolgt somit besonders schnell und ohne Zutun des Benutzers der Kameravorrichtung, sobald der Bewertungsparameter den vorbestimmten Schwellwert erreicht oder übersteigt.

In einer weiteren Ausführungsformen ist das Kamerabild auf einem Speichermedium oder in der Cloud gespeichert und das computerimplementierbare Verfahren sieht eine Löschung des Kamerabilds vor, wenn der Bewertungsparameter kleiner oder gleich einem vorbestimmten Schwellwert ist. Das Verfahren kann auch entsprechende Signale erzeugen, die ein Löschen triggern und diese bspw. an die Cloud und/oder das Smartphone senden. Dies ist insbesondere dann vorteilhaft, wenn das Verfahren auf einem Server im Internet implementiert ist und dadurch keinen direkten Zugriff auf die Fotoaufnahmen hat. Dadurch können bereits gespeicherte Kamerabilder effizient durch das computerimplementierbare Verfahren dahingehend analysiert werden, ob Kamerabilder gelöscht werden können. Dabei ist es vorstellbar, dass die Löschung automatisch erfolgt, wodurch auf sichere Art und Weise Speicherplatz freigegeben werden kann. Alternativ oder ergänzend kann ein Hinweis an einen Benutzer bezüglich einer vorgeschlagenen Löschung gegeben werden. Dadurch werden dem Benutzer nur diejenigen Kamerabilder präsentiert, die einen ungenügenden Bewertungsparameter aufweisen.

In einer bevorzugten Ausführungsformen wird eine Mehrzahl von Bildmerkmalen mit Referenzbildmerkmalen verglichen und der Bewertungsparameter wird basierend auf diesen Vergleichen berechnet. Damit kann durch das computerimplementierte Verfahren besonders sicher die Qualität des Kamerabilds berechnet werden.

Bevorzugt ist es hier vorstellbar, dass ein Referenzbild seine zugehörigen Metadaten mit den jeweiligen Parametern und/oder Metadatenpunkten umfasst, um die Anzahl von möglichen Referenzbildmerkmalen zu erhöhen, wodurch die Genauigkeit des Bewertungsparameters weiter verbessert werden kann. Ein Analysemodell kann somit auf eine besonders gut definierte Datenbasis von Referenzbildmerkmalen zugreifen.

In einer besonders bevorzugten Ausführungsform wird das Bildmerkmal in Bezug auf eine Motivkategorie, eine Bildaufteilung, und/oder einem Kamerabild-Parameter ermittelt, wobei der Kamerabild-Parameter ausgewählt ist aus der Gruppe umfassend Schärfe, Belichtung, Rauschen, Schieflage, Farbstichigkeit, Organisation von Bildraum und Fläche, Farbraum, Farbverteilung und Kontrast.

Dabei ist es vorstellbar, dass der Bewertungsparameter unter Einbeziehung wenigstens einer der folgenden Kategorien berechnet wird:
- Ästhetik (basierend auf Organisation von Bildraum & Fläche, Farbraum, Farbverteilung und Kontrasten, etc)
- Professionalität (Schärfe, Belichtung, Rauschen, Schieflage, Farbstichigkeit)
- Bildaufteilung bzw. "Framing" (Goldener Schnitt, Goldene Spirale)
- Motiv (Anzahl Objekte, Art der Objekte, Beziehung zwischen den Objekten, Linienführung im Bild)

Dabei ist es möglich, dass mittels des computerimplementierbaren Verfahrens für eine Kategorie ein Kategoriewert für das bereitgestellte Kamerabild berechnet wird. Eine Mehrzahl von Kategoriewerten kann für die Berechnung des Bewertungsparameters zusammengerechnet und/oder gewichtet werden. Somit kann besonders sicher durch das computerimplementierbare Verfahren eine Aussage über die Qualität des bereitgestellten Kamerabilds getroffen werden.

Ein zweiter Aspekt der Erfindung betrifft eine Kameravorrichtung zum Bewerten eines Kamerabilds, wobei die Kameravorrichtung dazu eingerichtet ist und Mittel bereitstellt, das oben beschriebene computerimplementierbare Verfahren auszuführen. Als "Kameravorrichtung" kann beispielsweise ein Smartphone, eine Kompaktkamera oder eine Systemkamera zu verstehen sein. Diese Liste ist nur beispielhaft und nicht abschließend.

Beim Einsatz in Systemkameras, die über mehr Einstellungsmöglichkeiten verfügen können, ist es besonders vorteilhaft, bei der Ermittlung eines Bildmerkmals auch technische Parameter (Metadatenpunkte) zu berücksichtigen, die für Smartphones eine untergeordnete Rolle spielen können, wie beispielsweise ISO-Wert, Blendenöffnung, Blitzeinstellungen etc.

Ein dritter Aspekt der Erfindung betrifft eine Servervorrichtung eingerichtet zum Ausführen des vorstehend beschriebenen Verfahrens, insbesondere zum Bewerten des Kamerabilds, wobei die Servervorrichtung dazu eingerichtet ist und Mittel (z.B. Schnittstellen, Prozessoren) bereitstellt, das oben beschriebene computerimplementierte Verfahren auszuführen. Als "Servervorrichtung" kann ein einzelner Server oder eine Mehrzahl von Servern zu verstehen sein. Der einzelne Server kann an ein Kommunikationsnetzwerk angeschlossen sein bzw. die Mehrzahl von Servern kann durch ein Kommunikationsnetzwerk miteinander verbunden sein. Dabei ist es vorstellbar, dass unterschiedliche Server dazu eingerichtet sind, unterschiedliche Schritte des Verfahrens auszuführen: Beispielsweise kann allgemein ein Speicher-Server ein Kamerabild speichern und somit bereitstellen. Ergänzend oder alternativ kann eine Servervorrichtung einen Anwendungsserver, einen Bilddienst-Server, und einen externen Bildspeicher-Server umfassen. Bevorzugt können Referenzbilder auf dem Bilddienst-Server und/oder dem externen Bildspeicher-Server abgespeichert sein.

Ein vierter Aspekt der Erfindung betrifft ein System zum Bewerten eines Kamerabilds, umfassend eine Kameravorrichtung und eine Servervorrichtung, welche eingerichtet sind und Mittel bereitstellen, das oben beschriebene computerimplementierte Verfahren auszuführen, wobei die Kameravorrichtung dazu eingerichtet ist, das Kamerabild bereitzustellen, und wobei die Kameravorrichtung und die Servervorrichtung mittels einem Kommunikationsnetzwerk miteinander verbunden sind. Damit ist es beispielsweise möglich, dass Kamerabild durch eine Kameravorrichtung bereitzustellen. Das Kamerabild kann über das Kommunikationsnetzwerk an die Servervorrichtung gesendet werden, welche zum Beispiel den Bewertungsparameter berechnet.

Das Kommunikationsnetzwerk ist insbesondere ein mobiles Telekommunikationsnetz wie beispielsweise LTE, 5G und/oder 6G. Die Übertragung des Kamerabildes über ein solches Kommunikationsnetzwerk erzeugt einen Datenverkehr, der je höher ist, desto höher die Qualität des übertragenen Bildes ist. In einer vorteilhaften Ausführungsform ist es allerdings zum Bewerten des Bildes gar nicht notwendig, das Bild in der bestmöglichen Auflösung zu übertragen, sodass das Bild mit einer reduzierten Auflösung zu dem Server übertragen wird, damit dieser die Bewertung vornehmen kann. Die reduzierte Auflösung kann beispielsweise von dem Nutzer vorgegeben werden oder durch ein Expertenteam festgelegt sein. Insbesondere, wenn bestimmt wird, ob sich ein Objekt im goldenen Schnitt eines Kamerabildes befindet, kann dies auch mit einer reduzierten Auflösung bestimmt werden. Es ist zudem möglich, dass eine Applikation des Smartphones, welche das Kamerabild erstellt, dynamisch die reduzierte Auflösung festlegt.

### Figurenbeschreibung

Ausführungsformen der Erfindung werden nachstehend anhand der Figuren beschrieben. Dabei zeigen:
Figur 1 ein Flussdiagramm einer Ausführungsform eines erfindungsgemäßen computerimplementierten Verfahrens, und
Figur 2 ein Flussdiagramm einer anderen Ausführungsform eines erfindungsgemäßen computerimplementierten Verfahrens.

### Detaillierte Beschreibung

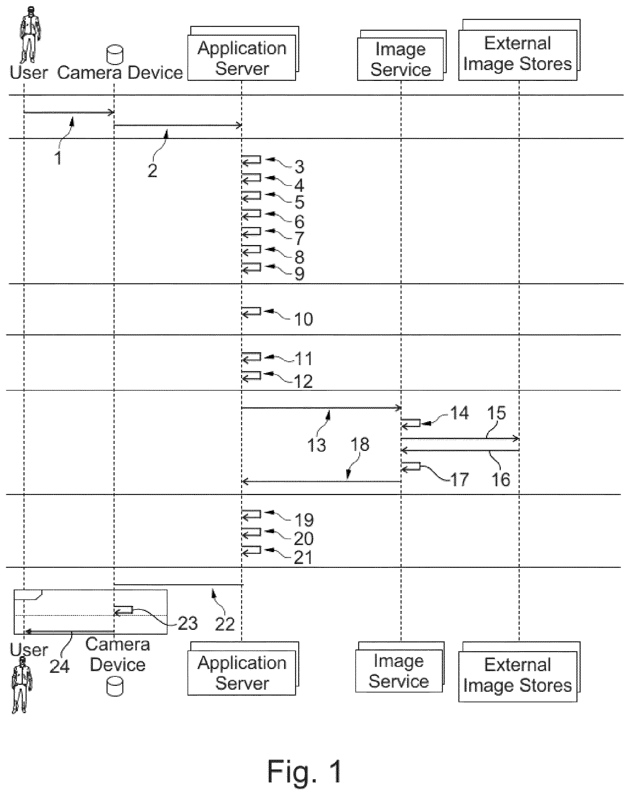

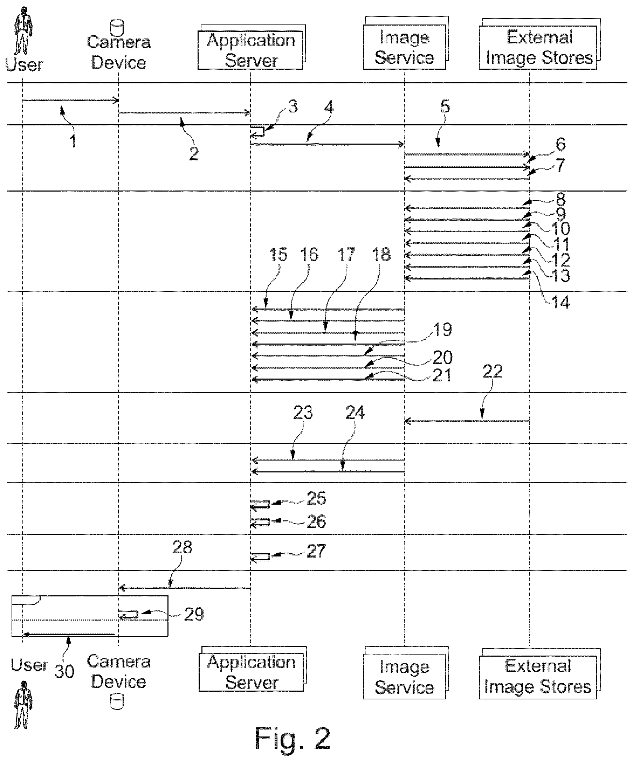

Im Folgenden werden besonders vorteilhafte Abläufe mit zusätzlichen optionalen Verfahrensschritten des erfindungsgemäßen computerimplementierten Verfahrens anhand der in Figuren 1 und 2 gezeigten Ablaufdiagramme näher erläutert. Dabei zeigen die gestrichelten Linien die einzelnen Objekte des Verfahrens, und zwar einen Benutzer ("User"), eine Kameravorrichtung ("Camera Device"), und eine Servervorrichtung umfassend einen Anwendungsserver ("Application Server"), einen Bilddienst-Server ("Image Service") und einen externen Bildspeicher-Server ("External Image Stores"), welche Verfahrensschritte vornehmen. Die Pfeile zwischen den Objekten zeigen eine Datenübergabe an ein anderes Objekt, auf dasselbe Objekt zurückverweisende Pfeile eine Verfahrenshandlung innerhalb des Objektes. Der Verfahrensablauf schreitet von oben nach unten hin fort.

Das computerimplementierte Verfahren kann in Figur 1 dadurch beginnen, dass der Benutzer im Schritt 1 ein Kamerabild erfasst. Unter "Erfassen" kann grundsätzlich verstanden werden, dass der Benutzer die aktivierte Kameravorrichtung auf das zu fotografierende Objekt richtet und das Kamerabild aufgenommen wird und beispielsweise auf einem Display der Kameravorrichtung angezeigt wird. Zum Beispiel hat der Benutzer noch nicht einen Auslöser der Kameravorrichtung betätigt. Ebenso kann darunter verstanden werden, dass das aufgenommene Kamerabild schon dauerhaft auf der Kameravorrichtung gespeichert ist, zum Beispiel nachdem der Benutzer den Auslöser der Kameravorrichtung betätigt hat.

Im Schritt 2 wird das Kamerabild bereitgestellt, vorzugsweise dem Anwendungsserver. Dabei können beispielsweise Bilddaten des Kamerabildes an den Anwendungsserver gesendet werden, der vorzugsweise in den Schritten 3 bis 9 Metadaten des Kamerabildes für die Gewinnung eines Bildmerkmals extrahieren kann (Schritt 3: Datum und Uhrzeit, Schritt 4: GPS-Position, Schritt 5: Kompassorientierung, Schritt 6: Gyroskop-Daten (Spin-AchsenRichtung(en), Schritt 7: ISO-Wert, Schritt 8: Apertur-Wert, Schritt 9: Belichtungszeit).

Im Schritt 10 wird wenigstens ein Bildmerkmal des Kamerabilds ermittelt. Dabei kann das Bildmerkmal zum Beispiel mittels eines Bilderkennungsalgorithmus anhand des aufgenommenen Motivs extrahiert bzw. ermittelt werden. Ergänzend oder alternativ ist die Ermittlung anhand der Metadaten des Kamerabilds vorstellbar. Ebenso ist vorstellbar, dass im Schritt 10 ein Bildmerkmal anhand der oben genannten Kategorien wie Ästhetik, Professionalität und Bildaufteilung extrahiert bzw. ermittelt werden kann.

Im Schritt 11 kann optional noch eine Blickrichtung des Kamerabilds ermittelt werden.

Im Schritt 12 können die ermittelten Bildmerkmale vorzugsweise in einem Bildmerkmal-Paket zusammengefasst werden, welches beispielsweise im Schritt 13 an einen Bilddienst-Server übermittelt werden kann.

Die Schritte 14 bis 16 zeigen eine beispielhafte Möglichkeit für das Bestimmen einer Gruppe von Referenzbildern anhand des Bildmerkmals: Im Schritt 14 kann der Bilddienst-Server zunächst nach eigenen Referenzbildern anhand wenigstens eines Bildmerkmals suchen. Alternativ oder ergänzend kann im Schritt 15 auch auf einem externen Bildspeicher-Server nach möglichen Referenzbildern anhand wenigstens eines Bildmerkmals gesucht werden, die im Schritt 16 dem Bilddienst-Server übermittelt werden können.

Im Schritt 17 wird von der Gruppe von ermittelten Referenzbildern wenigstens ein Referenzbildmerkmal verwendet. Dies kann beispielsweise durch Berechnung wenigstens eines Referenzbildmerkmals für die Gruppe von Referenzbildern oder durch Verwendung von wenigstens einem vorab ermittelten und gespeicherten Referenzbildmerkmal für die Gruppe von Referenzbildern geschehen. Dabei kann das Referenzbildmerkmal zum Beispiel mittels eines Bilderkennungsalgorithmus anhand der aufgenommenen Motive extrahiert bzw. ermittelt werden. Ebenso ist vorstellbar, dass im Schritt 22 ein Referenzbildmerkmal anhand der oben genannten Kategorien wie Metadaten, Ästhetik, Professionalität und Bildaufteilung extrahiert bzw. ermittelt werden kann.

Das zu verwendende Referenzbildmerkmal kann im Schritt 18 an den Anwendungsserver übermittelt werden. Im Schritt 19 wird ein Bildmerkmal mit dem Referenzbildmerkmal verglichen. Anschließend wird im Schritt 20 ein Bewertungsparameter für das Kamerabild basierend auf dem Vergleich zwischen dem Bildmerkmal und dem Referenzbildmerkmal berechnet.

Vorzugsweise kann basierend auf dem Bewertungsparameter im Schritt 21 eine Anweisung zum Verbessern des Kamerabilds an den Benutzer der Kameravorrichtung erzeugt werden, welche zusammen mit dem Bewertungsparameter im Schritt 22 an die Kameravorrichtung übermittelt werden kann.

Wenn der Bewertungsparameter beispielsweise über einem oder gleich einem vorab bestimmten Schwellwert liegt, kann das erfasste Kamerabild im Schritt 23 behalten werden. "Behalten" kann in diesem Zusammenhang bedeuten, dass zum Beispiel mittels einer Anweisung an die Kameravorrichtung automatisch ein Auslöser der Kameravorrichtung betätigt wird, oder dem Benutzer angezeigt wird, dass er den Auslöser betätigen soll, oder dass ein schon aufgenommenes und gespeichertes Kamerabild behalten wird.

Alternativ oder ergänzend zum Schritt 23 kann im Schritt 24 die Anweisung zum Verbessern des Kamerabilds angezeigt werden, zum Beispiel wenn der Bewertungsparameter kleiner oder gleich dem vorab bestimmten Schwellwert ist. Dadurch kann der Benutzer die Erfassung des Kamerabilds verändern. In diesem Zusammenhang können zum Beispiel die Richtung, der Abstand, der Zoomfaktor oder andere Kameraeinstellungen geändert werden können.

Alternativ oder ergänzend kann das computerimplementierte Verfahren in Figur 2 dadurch beginnen, dass der Benutzer im Schritt 1 ein Kamerabild erfasst. Unter "Erfassen" kann grundsätzlich verstanden werden, dass der Benutzer die aktivierte Kameravorrichtung auf das zu fotografierende Objekt richtet und das Kamerabild aufgenommen wird und beispielsweise auf einem Display der Kameravorrichtung angezeigt wird. In diesem Fall hat der Benutzer noch nicht einen Auslöser der Kameravorrichtung betätigt. Ebenso kann darunter verstanden werden, dass das aufgenommene Kamerabild schon dauerhaft auf der Kameravorrichtung gespeichert ist, zum Beispiel nachdem der Benutzer den Auslöser der Kameravorrichtung betätigt hat.

Im Schritt 2 wird das Kamerabild bereitgestellt, vorzugsweise dem Anwendungsserver. Dabei können beispielsweise Bilddaten des Kamerabildes an den Anwendungsserver gesendet werden.

Im Schritt 3 wird wenigstens ein Bildmerkmal des Kamerabilds ermittelt. Dabei kann das Bildmerkmal zum Beispiel mittels eines Bilderkennungsalgorithmus anhand des aufgenommenen Motivs extrahiert bzw. ermittelt werden. Ergänzend oder alternativ ist die Ermittlung anhand der Metadaten des Kamerabilds vorstellbar. Ebenso ist vorstellbar, dass im Schritt 3 ein Bildmerkmal anhand der oben genannten Kategorien wie Ästhetik, Professionalität und Bildaufteilung extrahiert bzw. ermittelt werden kann. Zusammengefasst können im Schritt 3 die Schritte 3 bis 12 aus Figur 1 ausgeführt werden.

Im Schritt 4 kann das wenigstens eine Bildmerkmal an den Bilddienst-Server übermittelt werden.

Im Schritt 5 wird eine Gruppe von Referenzbildern anhand des Bildmerkmals ermittelt.

Dazu kann beispielsweise eine ergänzende Anfrage an den externen Bildspeicher-Server gestellt werden. Vorzugsweise wird im Schritt 6 eine Anfrage für eine aggregierte Gruppe von ähnlichen Referenzbildern gestellt, welche im Schritt 7 dem Bilddienst-Server zur Verfügung gestellt werden können.

Das Verwenden von wenigstens einem Referenzbildmerkmal für die Gruppe von Referenzbildern kann beispielsweise über extrahierte Metadaten für die Gruppe von Referenzbildern erfolgen (Schritte 8 bis 21):
In den Schritten 8 bis 14 können Metadaten für die Gruppe von Referenzbildern beispielsweise von dem externen Bildspeicherbindedienstserver an den Bilddienst-Server übermittelt werden (Schritt 8: Datum und Uhrzeit, Schritt 9: GPS-Position, Schritt 10: Kompassorientierung, Schritt 11: Gyroskop-Daten (Spin-Achsen-Richtung(en), Schritt 12: ISO-Wert, Schritt 13: Apertur-Wert, Schritt 14: Belichtungszeit).

In den Schritten 15 bis 21 können Metadaten für die Gruppe von Referenzbildern beispielsweise von dem Bilddienst-Server an den Anwendungsserver übermittelt bzw. mitgeteilt werden (Schritt 15: Datum und Uhrzeit, Schritt 16: GPS-Position, Schritt 17: Kompassorientierung, Schritt 18: Gyroskop-Daten (Spin-Achsen-Richtung(en), Schritt 19: ISO-Wert, Schritt 20: Apertur-Wert, Schritt 21: Belichtungszeit).

Alternativ oder ergänzend zu den Schritten 8 bis 21 kann im Schritt 22 wenigstens ein Referenzbildmerkmal für die Gruppe von Referenzbildern berechnet werden oder es kann wenigstens ein vorab ermitteltes und gespeichertes Referenzbildmerkmal für die Gruppe von Referenzbildern verwendet werden. Dabei kann das Referenzbildmerkmal zum Beispiel mittels eines Bilderkennungsalgorithmus anhand der aufgenommenen Motive extrahiert bzw. ermittelt werden. Ebenso ist vorstellbar, dass im Schritt 22 ein Referenzbildmerkmal anhand der oben genannten Kategorien wie Metadaten, Ästhetik, Professionalität und Bildaufteilung extrahiert bzw. ermittelt werden kann.

Im Schritt 23 kann optional noch eine Blickrichtung des Kamerabilds ermittelt werden.

Im Schritt 24 können die ermittelten Bildmerkmale vorzugsweise in einem Bildmerkmal-Paket zusammengefasst werden.

Die Schritte 23 und 24 können alternativ oder ergänzend auch für die Gruppe von Referenzbildern ausgeführt werden.

Im Schritt 25 wird ein Bildmerkmal mit dem Referenzbildmerkmal verglichen. Anschließend wird im Schritt 26 ein Bewertungsparameter für das Kamerabild basierend auf dem Vergleich zwischen dem Bildmerkmal und dem Referenzbildmerkmal berechnet.

Im Schritt 27 können basierend auf dem Bewertungsparameter im Schritt 26 eine Anweisung zum Verbessern des Kamerabilds an den Benutzer der Kameravorrichtung erzeugt werden und/oder dazugehörige Kameraeinstellungen ermittelt werden.

Vorzugsweise kann basierend auf dem Bewertungsparameter im Schritt 28 eine Anweisung zum Verbessern des Kamerabilds an den Benutzer der Kameravorrichtung erzeugt werden, welche zusammen mit dem Bewertungsparameter im Schritt 28 an die Kameravorrichtung übermittelt werden kann. Ergänzend oder alternativ können auch verbesserte Kameraeinstellungen im Schritt 28 übermittelt werden.

Wenn der Bewertungsparameter über einem vorab bestimmten Schwellwert liegt, kann das erfasste Kamerabild im Schritt 29 behalten werden. "Behalten" kann in diesem Zusammenhang bedeuten, dass zum Beispiel automatisch ein Auslöser der Kameravorrichtung betätigt wird, oder dem Benutzer angezeigt wird, dass er den Auslöser betätigen soll, oder dass ein schon aufgenommenes und gespeichertes Kamerabild behalten wird.

Alternativ oder ergänzend zum Schritt 29 kann im Schritt 30 die Anweisung zum Verbessern des Kamerabilds angezeigt werden, zum Beispiel wenn der Bewertungsparameter kleiner oder gleich dem vorab bestimmten Schwellwert ist. Dadurch kann der Benutzer die Erfassung des Kamerabilds verändern. In diesem Zusammenhang können zum Beispiel die Richtung, der Abstand, der Zoomfaktor oder andere Kameraeinstellungen geändert werden können.

Grundsätzlich ist es in allen Ausführungsformen des computerimplementierbaren Verfahrens möglich, dass für einen oder mehrere Verfahrensschritt(e) ein oder mehrere Machine-Learning-Modell(e) zum Einsatz kommt:
Beispielsweise ist es möglich, dass ein erstes Machine-Learning-Modell darauf trainiert ist, wenigstens eine Bildmerkmal des Kamerabilds zu ermitteln. Trainingsdaten können zum Beispiel vorab kategorisierte Trainingsbilder mit vorab bestimmten Bildmerkmalen sein. Insbesondere kann das Bildmerkmal in Bezug auf eine Motivkategorie, eine Bildaufteilung, und/oder einem Kamerabild-Parameter durch das erste Machine-Learning-Modell ermittelt werden, wobei der Kamerabild-Parameter ausgewählt ist aus der Gruppe umfassend Schärfe, Belichtung, Rauschen, Schieflage, Farbstichigkeit, Organisation von Bildraum und Fläche, Farbraum, Farbverteilung und Kontrast.

Ebenso ist es möglich, dass ein zweites Machine-Learning-Modell darauf trainiert ist, eine Gruppe von Referenzbildern zu bestimmen. Trainingsdaten können zum Beispiel vorab definierte Gruppen von Referenzbildern mit vorab bestimmten Referenzbildmerkmalen sowie vorab definierte Zuordnungen eines Bildmerkmals zu einer Gruppe von Referenzbildern sein. Ebenso ist es denkbar, dass ein drittes Machine-Learning-Modell darauf trainiert ist, wenigstens ein Referenzbildmerkmal für eine Gruppe von Referenzbildern zu ermitteln. Trainingsdaten können zum Beispiel wenigstens eine vorab definierte Gruppe von Referenzbildern mit wenigstens einem vorab definierten Referenzbildmerkmal sein. Damit können Referenzbildmerkmale für Gruppen von Referenzbildern besonders gut ermittelt werden, zum Beispiel wenn neue Gruppen von Referenzbildern gebildet werden oder bestehende Gruppen von Referenzbildern mit neuen Referenzbildern ergänzt werden.

Es ist erfindungsgemäss, dass ein viertes Machine-Learning-Modell darauf trainiert ist, das Bildmerkmal und das Referenzbildmerkmal zu vergleichen. Trainingsdaten können zum Beispiel vorab definierte Bildmerkmale, Referenzbildmerkmale und deren Vergleiche sein.

Weiterhin ist es erfindungsgemäss, dass ein fünftes Machine-Learning-Modell darauf trainiert ist, den Bewertungsparameter zu berechnen. Trainingsdaten können zum Beispiel vorab definierte Vergleiche zwischen Bildmerkmalen und Referenzbildmerkmal sowie daraus resultierende Bewertungsparameter sein.

Ebenso ist es denkbar, dass ein sechstes Machine-Learning-Modell darauf trainiert ist, neue Kameraeinstellungen zur Verbesserung des Bewertungsparameters zu ermitteln.

Trainingsdaten können zum Beispiel vorab definierte Bewertungsparameter für Kamerabilder basierend auf dem Vergleich zwischen dem Bildmerkmal und dem Referenzbildmerkmal, Kameraeinstellungen des originalen Kamerabilds und Kameraeinstellungen eines neuen Kamerabilds mit einem verbesserten Bewertungsparameter sein.

Ebenso ist es denkbar, dass ein siebtes Machine-Learning-Modell darauf trainiert ist, eine Anweisung zum Verbessern des Kamerabilds an einen Benutzer einer Kameravorrichtung zu erzeugen. Trainingsdaten können zum Beispiel vorab definierte originale Kamerabilder, originale Bewertungsparameter für diese Kamerabilder basierend auf dem Vergleich zwischen dem Bildmerkmal und dem Referenzbildmerkmal, veränderte Kamerabilder und verbesserte Bewertungsparameter für diese veränderten Kamerabilder basierend auf dem Vergleich zwischen einem neuen Bildmerkmal und dem Referenzbildmerkmal sein, wobei die Veränderung des Kamerabilds auf einer vorab definierten Anweisung beruht.

Nachfolgend werden weitere optionale technische Details beschrieben, die die korrespondierenden Schritte gemäß der Ausführungsbeispiele der Fig.1 und Fig. 2 näher beschreiben.
- Kamera: Identifikation und Extraktion von Bildmetadaten beim Ausrichten auf ein Motiv (,tagging')' Landschaft, Personen, Portrait, Wald, Skyline, Panorama
- Kamera Einstellungen (Blende, Belichtung, ISO, Weiß-Abgleich etc) werden ebenfalls erfasst, sowie Metadaten wie GPS Lokation, Himmelsrichtung, Timestamp, relative Bewegung des Motivs sowie des Fotografen
- Bilddatenanalyse wie Farbverteilung, Anzahl Farben, Fokuspunkte, Anzahl Elemente (Personen, Pflanzen, Gebäude etc.) Belichtung der Aufnahme (Helligkeitsverteilung) Verteilung von Objekten und Zuordnung einer Kompositionsvariante (Goldener Schnitt, 3er Regel, Spirale)
- Extraktion von Konturen auf dem Bild, um Linien zu erkennen und räumliche Dimension zu analysieren. Abgleich mit diversen Vorlagen aus der Bilddatenbank und deren Parametern im Hinblick auf die Bewertung.
- Optional: Erfassung von Points of Interest anhand der vorigen beiden Punkte, um z.B. Landmarks oder Sehenswürdigkeiten zu identifizieren und hinzuzufügen
- Anhand Objekterkennung und aktueller Kameraeinstellung (Fokus, Ausschnitt) relevante Elemente erkennen und deren Positionierung in der Gesamtkomposition zu analysieren und mit der Bilddatenbank zu vergleichen (bspw. Portraitfoto mit einer Person im Fokus und mehreren anderen Personen im Hintergrund ermittelt das Hauptmotiv und Vordersowie Hintergrundelemente anhand Fokus und Bildeinstellungen.
- Übermittlung dieser Info an Referenzbilddatenbank per 4G/5G Netzwerktechnologie
- Anhand der Metadaten werden in der Bilddatenbank entsprechende Übereinstimmungen gesucht
- Aus der Menge der gefundenen Bilder werden nur Bilder als Referenz verwendet, die eine maximale Abweichung der eigenen Kameraeinstellungen von +/- 10% aufweisen oder variabel nach Nutzereinstellungen
- Die Kameraeinstellungen der nun gefundenen Referenzbilder werden gemittelt, wobei Dinge wie Social Media Informationen wie Likes, Views/Aufrufe etc. zu einer höheren Gewichtung der Kameraeinstellungen einzelner Referenzbilder führen kann.
- Diese Kameraeinstellungen sowie Nutzeranweisungen wie Ausrichtung der Kamera, Neigung, etc. werden dann an die Kamera des Nutzers übertragen (4G/5G Netzwerke) um das gewünschte Foto mit den optimalen Einstellungen aufzunehmen bzw. den Fotografen zu informieren.

## Patentansprüche

1. Computerimplementiertes Verfahren zum Bewerten eines Kamerabilds, umfassend die folgenden Schritte:
Bereitstellen (2) des Kamerabilds,
Ermitteln (12) wenigstens eines Bildmerkmals des Kamerabilds, (14, 15, 16) einer Gruppe von Referenzbildern anhand des Bildmerkmals,
Verwenden (17) von wenigstens einem Referenzbildmerkmal für die Gruppe von Referenzbildern,
Vergleichen (19) des Bildmerkmals und des Referenzbildmerkmals, und
Berechnen (20) eines Bewertungsparameters für das Kamerabild basierend auf dem Vergleich zwischen dem Bildmerkmal und dem Referenzbildmerkmal, **dadurch gekennzeichnet,**
**dass** ein trainiertes Machine-Learning-Modell das Bildmerkmal und das Referenzbildmerkmal miteinander vergleicht ein trainiertes Machine-Learning-Modell den Bewertungsparameter berechnet.

2. Computerimplementiertes Verfahren nach Anspruch 1, wobei das Ermitteln wenigstens eines Bildmerkmals des Kamerabilds ein Verwenden eines Bilderkennungsalgorithmus umfasst.

3. Computerimplementiertes Verfahren nach Anspruch 1 oder 2, wobei das Ermitteln wenigstens eines Bildmerkmals des Kamerabilds ein Verwenden wenigstens eines Metadatenpunkts von Metadaten des Kamerabildes umfasst.

4. Computerimplementiertes Verfahren nach Anspruch 3, wobei ein Metadatenpunkt eine Kameraeinstellung einer Kameravorrichtung ist, mit der das Kamerabild erfasst wurde.

5. Computerimplementiertes Verfahren nach Anspruch 4, wobei das Verfahren ein Ermitteln von neuen Kameraeinstellungen zur Verbesserung des Bewertungsparameters und bevorzugt ein Übermitteln der neuen Kameraeinstellungen an eine Kameravorrichtung umfasst.

6. Computerimplementiertes Verfahren nach einem der vorhergehenden Ansprüche, ferner umfassend ein Anzeigen des Bewertungsparameters an einer Kameravorrichtung.

7. Computerimplementiertes Verfahren nach einem der vorhergehenden Ansprüche, ferner umfassend ein Erzeugen einer Anweisung zum Verbessern des Kamerabilds an einen Benutzer einer Kameravorrichtung, wobei bevorzugt die Anweisung dem Benutzer der Kameravorrichtung angezeigt wird, wenn der Bewertungsparameter kleiner oder gleich einem vorbestimmten Schwellwert ist.

8. Computerimplementiertes Verfahren nach einem der vorhergehenden Ansprüche, ferner umfassend ein Erzeugen einer Anweisung an eine Kameravorrichtung zum Aufnehmen des Kamerabilds, wenn der Bewertungsparameter größer oder gleich einem vorbestimmten Schwellwert ist.

9. Computerimplementiertes Verfahren nach einem der vorhergehenden Ansprüche, wobei das Kamerabild auf einem Speichermedium gespeichert ist und das Verfahren eine Löschung des Kamerabilds vorsieht, wenn der Bewertungsparameter kleiner oder gleich einem vorbestimmten Schwellwert ist.

10. Computerimplementiertes Verfahren nach einem der vorhergehenden Ansprüche, wobei eine Mehrzahl von Bildmerkmalen und des Referenzbildmerkmalen verglichen wird und der Bewertungsparameter basierend auf diesen Vergleichen berechnet wird.

11. Computerimplementiertes Verfahren nach einem der vorhergehenden Ansprüche, wobei das Bildmerkmal in Bezug auf eine Motivkategorie, eine Bildaufteilung, und/oder einem Kamerabild-Parameter ermittelt wird, wobei der Kamerabild-Parameter ausgewählt ist aus der Gruppe umfassend Schärfe, Belichtung, Rauschen, Schieflage, Farbstichigkeit, Organisation von Bildraum und Fläche, Farbraum, Farbverteilung und Kontrast.

12. Kameravorrichtung zum Bewerten eines Kamerabilds, wobei die Kameravorrichtung dazu eingerichtet ist und Mittel bereitstellt, das computerimplementierte Verfahren nach einem der Ansprüche 1 bis 11 auszuführen.

13. Servervorrichtung zum Bewerten eines Kamerabilds, wobei die Servervorrichtung dazu eingerichtet ist und Mittel bereitstellt, das computerimplementierte Verfahren nach einem der Ansprüche 1 bis 11 auszuführen.

14. System zum Bewerten eines Kamerabilds, umfassend eine Kameravorrichtung und eine Servervorrichtung, welche eingerichtet sind und Mittel bereitstellen, das computerimplementierte Verfahren nach einem der Ansprüche 1 bis 11 auszuführen, wobei die Kameravorrichtung dazu eingerichtet ist, das Kamerabild bereitzustellen, und wobei die Kameravorrichtung und die Servervorrichtung mittels einem Kommunikationsnetzwerk miteinander verbunden sind.

15. Computerprogrammprodukt, das bei der Ausführung des Programms durch eine Kameravorrichtung und/oder eine Servervorrichtung diese veranlasst, die Schritte des computerimplementierten Verfahrens nach einem der Ansprüche 1 bis 11 auszuführen.

## Claims

1. Computer-implemented method for evaluating a camera image, comprising the following steps:
Providing (2) the camera image,
Determining (12) at least one image feature of the camera image (14, 15, 16) of a group of reference images based on the image feature,
Using (17) at least one reference image feature for the group of reference images,
Comparing (19) the image feature and the reference image feature, and
Calculating (20) an evaluation parameter for the camera image on the basis of the comparison between the image feature and the reference image feature, **characterized in that** a trained machine learning model compares the image feature and the reference image feature with each other, a training machine learning model calculates the evaluation parameters.

2. Computer-implemented method according to Claim 1, wherein the determination of at least one image feature of the camera image comprises the use of an image recognition algorithm.

3. Computer-implemented method according to Claim 1 or 2, wherein the determination of at least one image feature of the camera image comprises the use of at least one metadata point of metadata of the camera image.

4. Computer-implemented method according to Claim 3, wherein a metadata point is a camera setting of a camera apparatus with which the camera image was captured.

5. Computer-implemented method according to Claim 4, wherein the method comprises a determination of new camera settings for improving the evaluation parameter and preferably a transmission of the new camera settings to a camera apparatus.

6. Computer-implemented method according to any one of the preceding claims, further comprising displaying the evaluation parameter on a camera apparatus.

7. Computer-implemented method according to any one of the preceding claims, further comprising generating an instruction for improving the camera image to a user of a camera apparatus, wherein the instruction is preferably displayed to the user of the camera apparatus if the evaluation parameter is less than or equal to a predetermined threshold value.

8. Computer-implemented method according to any one of the preceding claims, further comprising generating an instruction to a camera apparatus to capture the camera image when the evaluation parameter is greater than or equal to a predetermined threshold.

9. Computer-implemented method according to any one of the preceding claims, wherein the camera image is stored on a storage medium and the method provides for deletion of the camera image if the evaluation parameter is less than or equal to a predetermined threshold value.

10. Computer-implemented method according to any one of the preceding claims, wherein a plurality of image features and the reference image features are compared and the evaluation parameter is calculated based on these comparisons.

11. Computer-implemented method according to any one of the preceding claims, wherein the image feature is determined with respect to a subject category, an image split, and/or a camera image parameter, wherein the camera image parameter is selected from the group comprising sharpness, exposure, noise, skew, colour cast, organization of image space and area, colour space, colour distribution and contrast.

12. Camera apparatus for evaluating a camera image, wherein the camera apparatus is configured and provides means for carrying out the computer-implemented method according to any one of Claims 1 to 11.

13. Server apparatus for evaluating a camera image, wherein the server apparatus is configured and provides means for carrying out the computer-implemented method according to any one of Claims 1 to 11.

14. System for evaluating a camera image, comprising a camera apparatus and a server apparatus which are configured and provide means for carrying out the computer-implemented method according to any one of Claims 1 to 11, wherein the camera apparatus is configured to provide the camera image, and wherein the camera apparatus and the server apparatus are connected to one another by means of a communication network.

15. Computer software product which, when the software is executed by a camera apparatus and/or a server apparatus, causes them to carry out the steps of the computer-implemented method according to any one of Claims 1 to 11.

## Revendications

1. Procédé mis en œuvre par ordinateur pour évaluer une image de caméra, comprenant les étapes suivantes :
fourniture (2) de l'image de caméra
détermination (12) d'au moins une caractéristique d'image de l'image de caméra (14, 15, 16) d'un groupe d'images de référence sur la base de la caractéristique d'image,
utilisation (17) d'au moins une caractéristique d'image de référence pour le groupe d'images de référence,
comparaison (19) de la caractéristique d'image et de la caractéristique d'image de référence, et
calcul (20) d'un paramètre d'évaluation pour l'image de caméra sur la base de la comparaison entre la caractéristique d'image et la caractéristique d'image de référence,
**caractérisé en ce qu'**un modèle d'apprentissage automatique entraîné compare la caractéristique d'image et la caractéristique d'image de référence et qu'un modèle d'apprentissage automatique entraîné calcule le paramètre d'évaluation.

2. Procédé mis en œuvre par ordinateur selon la revendication 1, dans lequel la détermination d'au moins une caractéristique d'image de l'image de caméra comprend l'utilisation d'un algorithme de reconnaissance d'image.

3. Procédé mis en œuvre par ordinateur selon la revendication 1 ou 2, dans lequel la détermination d'au moins une caractéristique d'image de l'image de caméra comprend une utilisation d'au moins un point de métadonnées des métadonnées de l'image de caméra.

4. Procédé mis en œuvre par ordinateur selon la revendication 3, dans lequel un point de métadonnées est un paramètre de caméra d'un dispositif de caméra, avec lequel l'image de caméra a été capturée.

5. Procédé mis en œuvre par ordinateur selon la revendication 4, dans lequel le procédé comprend une détermination de nouveaux paramètres de caméra pour améliorer le paramètre d'évaluation et de préférence une transmission des nouveaux paramètres de caméra à un dispositif de caméra.

6. Procédé mis en œuvre par ordinateur selon une quelconque des revendications précédentes, comprenant en outre un affichage du paramètre d'évaluation sur un dispositif de caméra.

7. Procédé mis en œuvre par ordinateur selon une des revendications précédentes, comprenant en outre la génération d'une instruction pour améliorer l'image de caméra à un utilisateur d'un dispositif de caméra, dans lequel de préférence l'instruction est affichée à l'utilisateur du dispositif de caméra lorsque le paramètre d'évaluation est inférieur ou égal à un seuil prédéterminé.

8. Procédé mis en œuvre par ordinateur selon une quelconque des revendications précédentes, comprenant en outre une génération d'une instruction à un dispositif de caméra pour enregistrer l'image de caméra si le paramètre d'évaluation est supérieur ou égal à un seuil prédéterminé.

9. Procédé mis en œuvre par ordinateur selon une quelconque des revendications précédentes, dans lequel l'image de caméra est mémorisée sur un support de mémorisation et le procédé prévoit une suppression de l'image de caméra si le paramètre d'évaluation est inférieur ou égal à une valeur seuil prédéterminée.

10. Procédé mis en œuvre par ordinateur selon une quelconque des revendications précédentes, dans lequel une pluralité de caractéristiques d'image et les caractéristiques d'image de référence sont comparées et le paramètre d'évaluation est calculé sur la base de ces comparaisons.

11. Procédé mis en œuvre par ordinateur selon une des revendications précédentes, dans lequel la caractéristique d'image est déterminé par rapport à une catégorie de motif, une division d'image et/ou un paramètres d'image de caméra, dans lequel le paramètre d'image de caméra est sélectionné dans le groupe comprenant la netteté, l'exposition, le bruit, l'inclinaison, la dominante de couleur, l'organisation de l'espace et de la zone d'image, l'espace colorimétrique, la distribution des couleurs et le contraste.

12. Dispositif de caméra pour évaluer une image de caméra, dans lequel le dispositif de caméra est configuré et fournit des moyens pour mettre en œuvre le procédé mis en œuvre par ordinateur selon une des revendications 1 à 11.

13. Dispositif de serveur pour évaluer une image de caméra, dans lequel le dispositif de serveur est configuré et fournit des moyens pour mettre en œuvre le procédé mis en œuvre par ordinateur selon une des revendications 1 à 11.

14. Système d'évaluation d'une image de caméra, comprenant un dispositif de caméra et un dispositif de serveur qui sont configurés et fournissent des moyens pour mettre en œuvre le procédé mis en œuvre par ordinateur selon une des revendications 1 à 11, dans lequel le dispositif de caméra est configuré pour fournir l'image de caméra et dans lequel le dispositif de caméra et le dispositif de serveur sont connectés l'un à l'autre au moyen d'un réseau de communication.

15. Produit de programme informatique qui, lorsqu'il est exécuté par un dispositif de caméra et/ou un dispositif de serveur, amène le dispositif de caméra et/ou un dispositif de serveur à exécuter les étapes du procédé mis en œuvre par ordinateur selon une quelconque des revendications 1 à 11.
